# FASCICULE DE BREVET EUROPEEN

(11) **EP 1 867 259 B1**
(45) Date de publication et mention de la délivrance du brevet: **20.01.2010**
(21) Numéro de dépôt: 06115512.3
(22) Date de dépôt: 15.06.2006
(51) Int. Cl.: A47J 31/44, A47J 31/54

(54) **Machine pour la préparation de boissons munie d'un dispositif de support chauffant**
Getränkezubereitungsmaschine mit Warmtragplatte
Beverage machine with warming support plate

(43) Date de publication de la demande: 19.12.2007
(73) Titulaire: Nestec S.A., 1800 Vevey (CH)
(72) Inventeur: Gavillet, Gilles, 1670 Ursy FR (CH); Möri, Peter, 3272 walperswil (CH); Kristlbauer, Jürgen, 3052 Zollikofen (CH)
(74) Mandataire: Schnyder, Frank Simon

(56) Documents cités:
- DE-C1- 4 139 804
- FR-A1- 2 326 898
- FR-A1- 2 713 071

## Description

La présente invention se rapporte au domaine des machines de préparation de boissons, telles que les machines à café. En particulier, elle concerne une amélioration pour préchauffer des tasses et les réguler à une certaine température.

Il existe des machines à café possédant un support pour réceptionner des objets, en particulier, des tasses ou autres ustensiles (mugs, cuillères,...) et les préchauffer. L'avantage principal, une fois la boisson servie par la machine, est de réduire les échanges de chaleur entre la boisson et la tasse et donc ralentir la chute de température de la boisson dans la tasse.

Les machines existantes utilisent généralement un support de tasses associé à un élément de chauffe. Un premier principe consiste à utiliser une simple résistance chauffante indépendante du corps de chauffe proprement-dit servant à chauffer l'eau de la machine. Ce principe génère une augmentation de la puissance consommée par la machine et nécessite également une commande électrique spécifique. Un second principe consiste à utiliser, pour chauffer au moins partiellement le support de tasses, le corps de chauffe utilisé pour chauffer l'eau servant à produire la boisson. Les deux principes peuvent aussi être utilisés en combinaison.

Toutefois, l'intégration du corps de chauffe lui-même pour la fonction "chauffe-tasse", (par exemple, un thermobloc ou un boiler servant à chauffer l'eau) peut poser certains problèmes. Un premier problème provient de ce que le corps de chauffe atteint des températures très élevées, de l'ordre de 90-100°C et donc peut provoquer des risques de brûlure en cas de contact avec le chauffe-tasse. Un second problème provient de ce que l'eau qui est conduite au travers du corps de chauffe transmet des vibrations provenant de la pompe à eau dans machine (par exemple, une pompe à piston ou tout autre élément générant des vibrations). Ces vibrations peuvent être transmises à la plaque de support en cas de contact direct et faire vibrer les tasses, grilles ou tout autre objet posé sur la machine (voire même les déplacer) et affecter le confort sonore lors de l'utilisation de la machine.

L'invention vise à résoudre ces problèmes. Pour cela, l'invention concerne une machine pour la préparation de boissons, notamment pour boissons chaudes du type café, lait, chocolat chaud ou thé telle que définie dans la revendication 1 ou 2.

Les termes "dispositif de support chauffant" ou "chauffe-tasse" sont utilisés indifféremment dans la description sans être limités strictement aux tasses; d'autres objets pouvant être chauffés par le dispositif (tels que mugs, conteneur de liquide ou de mousse, cuillères, etc.).

Par "moyen de régulation de chaleur", il faut entendre tout élément ou combinaison d'éléments permettant de transmettre et réguler le transfert de chaleur du corps de chauffe au support de tasses de manière à ce que la température du support de tasses atteigne la valeur nécessaire à l'application souhaitée par exemple de manière à éviter les risques de brûlures au toucher du support de tasses et/ou des tasses elles-mêmes ou de manière à obtenir une température du support de tasses et/ou des tasses elles-mêmes à un niveau permettant de garder le liquide à une température de consommation idéale.

Par "moyen d'amortissement" il faut entendre tout élément ou combinaison d'éléments permettant de réduire de manière significative les vibrations provenant de la pompe notamment d'origine hydraulique ou mécanique.

Le moyen de régulation de chaleur et le moyen d'amortissement peuvent être directement associés ou encore préférablement formé d'un seul et même moyen de manière à simplifier la structure et réduire les coûts. Dans un premier mode possible, le moyen de régulation de chaleur et le moyen de d'amortissement sont un seul et même moyen de régulation de chaleur et d'amortissement.

Selon ce mode, le moyen de régulation de chaleur et d'amortissement peut être interposé en contact, d'une part, avec le corps de chauffe et en contact, d'autre part, avec l'élément de support de tasses. Le moyen de régulation de chaleur et d'amortissement est alors formé dans un matériau à la fois conductible thermiquement et amortissant les vibrations.

De préférence, le moyen de régulation de chaleur et d'amortissement est en matériau élastique ou viscoélastique. Un choix préférentiel est un matériau élastomérique ou silicone.

Par exemple, le moyen de régulation de chaleur et d'amortissement peut être au moins un bloc ou tampon interposé entre le corps de chauffe et le support de tasses. Le moyen possède une surface totale de transfert compris entre 0.5 et 3 cm², de préférence entre 1 et 2 cm², et une épaisseur comprises entre 0.1 et 2 cm. Bien entendu, les dimensions de la surface de transfert et d'épaisseur peuvent être calculées ou obtenues par expérimentation de l'homme de l'art sans difficultés particulières, en fonction des matériaux, en particuliers, des coefficients de transfert de chaleur et d'amortissement, des surfaces de contact et de plages de températures de fonctionnement du corps de chauffe et de la plage de températures du support de tasses désirée.

L'élément support de tasses peut être en matériau plastique ou en métal. De préférence, il s'agira d'un matériau métallique tel que de l'aluminium ou un alliage d'aluminium de manière à transférer une température homogène sur toute la surface de support et assurer ainsi une température constante quel que soit l'endroit où repose l'objet.

Selon une alternative, le moyen de régulation de chaleur et/ou d'amortissement fait partie intégrante du support de tasses. Il est possible en effet de prévoir que le support de tasses soit fait lui-même d'un ou plusieurs matériaux amortissants tels qu'un matériau ayant des propriétés élastiques ou viscoélastiques. Dans ce cas, le support peut être fait, par exemple, d'un multicouche comprenant au moins une couche thermiquement conductrice pour supporter les tasses, telle qu'une couche métallique ou plastique dure, et au moins une sous-couche en matériau élastomère ou silicone. La sous-couche peut alors être au contact direct du corps de chauffe.

Selon un autre mode possible, le moyen de régulation de chaleur et/ou d'amortissement peut être formé une multitude de contacts discrets tels que des picots ou nervures avec le corps de chauffe; certains d'entre eux au moins, étant formés d'une matière élastique ou viscoélastique. Ainsi, la surface de contact entre le corps de chauffe est réduite de façon à réduire le transfert de chaleur mais aussi amortir les vibrations provenant du corps de chauffe.

Selon un autre mode de réalisation, le moyen de régulation de chaleur peut être séparé du moyen d'amortissement au sens où il s'agit de moyens distincts placés soit en série (par exemple, en structure multicouche) soit encore en parallèle (par exemple, côtes à côtes et interposés entre le corps de chauffe et le support de tasses).

Par exemple, le moyen de régulation de chaleur peut être un élément thermiquement isolant mais pas nécessairement amortissant. Par exemple, il peut s'agir de fibre, de tissu, de feutre, de carton ignifugé, ou autres matériaux isolants thermiquement.

Le moyen d'amortissement pris isolément ou en combinaison avec le moyen de régulation de chaleur peut aussi être un amortisseur hydraulique ou encore un simple ressort.

L'invention se rapporte aussi à une méthode pour chauffer un dispositif dit "chauffe-tasse" d'une machine pour la préparation de boissons caractérisée en ce qu'elle consiste, entre autres, à transmettre par conduction une partie seulement de la chaleur de surface du corps de chauffe au support de tasses dudit dispositif; lequel corps servant aussi à chauffer l'eau dans la machine. Pour cela, la méthode prévoir d'interposer entre la surface de support de tasses et le corps de chauffe au moins moyen de régulation thermique.

La méthode prévoir d'interposer un moyen de régulation thermique capable de réguler une température de l'ordre de 45 à 65°C sur la surface de support de tasses, à partir d'une température de fonctionnement du corps de chauffe pouvant excéder 80°C.

La méthode aussi consiste aussi, en combinaison ou indépendamment, à amortir tout ou partie des vibrations transmissibles du corps de chauffe au support de tasses. Pour cela, la méthode prévoit d'interposer entre la surface de support de tasse et le corps de chauffe au moins un moyen d'amortissement des vibrations.

La méthode prévoit que les moyens de régulations et d'amortissement sont les mêmes moyens ou encore des moyens séparés.

Certains modes seront détaillés de manière non limitative au regard des figures qui suivent:
Fig. 1 montre une vue schématique, partiellement en coupe, d'une machine pour la préparation de boisson selon l'invention;
Fig. 2 montre une vue schématique de face, partiellement en coupe, montrant un détail de la Fig. 1;
Fig. 3 montre une vue de détail d'un second mode de réalisation;
Fig. 4 montre une vue de détail d'un troisième mode de réalisation;
Fig. 5 montre une vue de détail d'un quatrième mode de réalisation;
Fig. 6 montre une vue de détail d'un cinquième mode de réalisation.

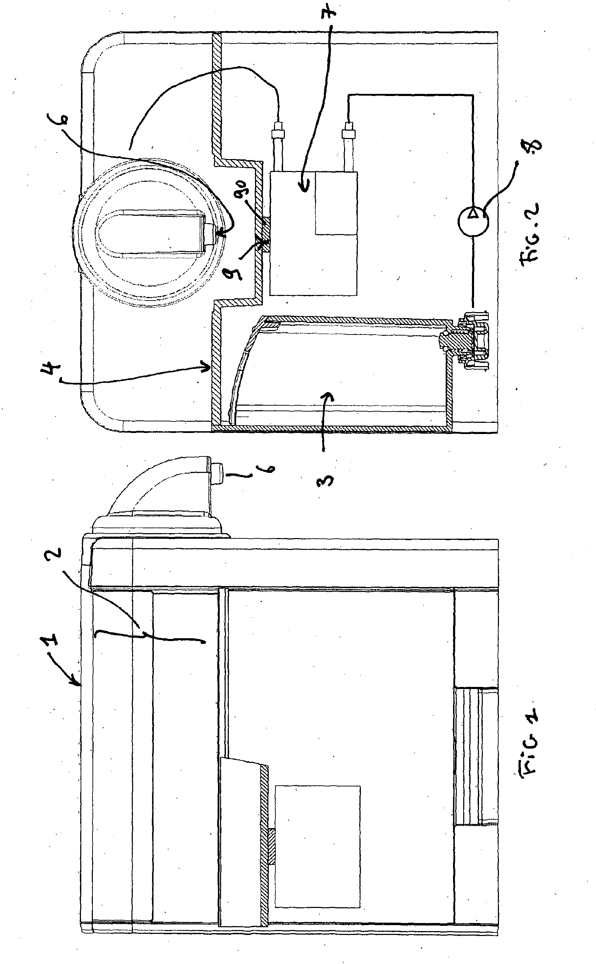

Comme le montre les figures 1 et 2 selon un premier exemple, la machine selon l'invention comprend un habillage 1, un module d'extraction 2 dans lequel est extrait la boisson à partir d'un ingrédient alimentaire tel que du café, un réservoir d'eau 3 et au moins un support de tasses 4 faisant partie d'un dispositif "chauffe-tasse" décrit en détail ci-après.

Le module d'extraction peut être conçu pour recevoir et extraire, dissoudre ou encore diluer tout produit alimentaire contenu dans un emballage telle qu'une capsule fermée contenant du café moulu ou encore un sachet en plastique et/ou aluminium ou sachet-filtre ou encore un simple filtre. Le module peut aussi être conçu pour recevoir directement la substance alimentaire sans emballage et procéder à la production de la boisson. Le module se termine par une sortie 6 d'où est délivrée la boisson.

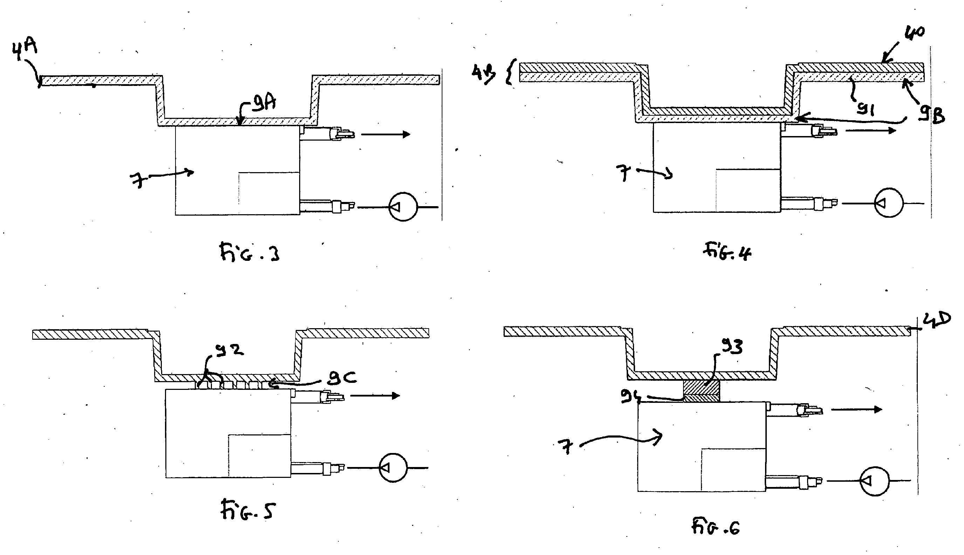

Le support de tasses 4 peut s'étendre sur un seul plan ou une seule surface de support ou au contraire sur plusieurs niveaux ou plusieurs surfaces comme le montrent les Figs. 3 et 4 . Il peut être formé de plusieurs parties séparées ou raccordées ou encore d'une seule partie telle qu'une seule plaque.

Le réservoir d'eau peut être amovible. On peut concevoir aussi une prise directe sur une alimentation au réseau d'eau courante.

Le dispositif "chauffe-tasse" comprend un corps de chauffe 7 prévu à l'intérieur de la machine lequel possède une surface externe chauffante. Le corps de chauffe peut être un thermobloc, par exemple, servant à chauffer l'eau pour préparer la boisson dans la machine. Le thermobloc comprend typiquement un circuit interne d'eau (tel qu'un serpentin interne en cuivre ou autre alliage ou autres métaux) lequel est inséré dans une matrice chauffée par des résistances électriques isolées électriquement. La matrice d'inertie thermique peut être en aluminium ou autre alliage ou en matière plastique. La matrice produit une chaleur de surface importante qui est donc utilisée comme source de chaleur dans le dispositif chauffe-tasse de l'invention.

L'eau est introduite à partir du réservoir 3 dans le corps de chauffe au moyen d'une pompe 8, de préférence, une pompe à piston. A noter que l'invention n'est pas nécessairement limitée à l'utilisation d'une pompe à piston mais s'étend à d'autre type de pompe possibles. L'eau est chauffée dans le corps de chauffe 7 à la température appropriée pour préparer la boisson dans le module d'extraction.

Selon un principe de l'invention, le corps de chauffe 7 est placé en association avec le support de tasses 4 par l'intermédiaire d'un moyen de régulation de chaleur et d'amortissement 9 formé par un bloc ou tampon 90. Ledit tampon est, par exemple, en matériau élastique ou viscoélastique de façon à procurer une atténuation des vibrations transmises par le corps de chauffe au support de tasse. Les vibrations sont transférées en particulier par le fluide et/ou les conduites en provenance de la pompe ou encore par d'autres modes de transmission possibles telles que par voie solide entre le corps de chauffe et d'autres composants de la machine. Ledit bloc possède aussi une épaisseur suffisante afin de réguler la température transmise à la plaque de support par le corps de chauffe. Typiquement, le corps de chauffe atteint régulièrement une température maximale de surface d'environ 100°C ou 150°C lors de la préparation de vapeur alors que la température souhaitée du support de tasses 4 peut être d'environ 45-65°C. Le matériau et les dimensions sont choisis pour assurer dans des conditions normales d'utilisation de la machine une perte de chaleur suffisante permettant de monter puis réguler sensiblement la température du support de tasses à environ 45-65°C. Par exemple, un bloc silicone d'épaisseur d'isolation de dimensions: diamètre d'environ 1.2cm et d'environ 4mm d'épaisseur a donné des résultats satisfaisants.

Le support de tasses 4 peut être, quant à lui, fabriqué en matériau métallique ou encore en plastique dur résistant à la chaleur. Il est préférable de choisir un matériau plutôt bon conducteur à la chaleur tel que l'aluminium ou un alliage à base d'aluminium de façon à avoir une répartition homogène de la température sur toute la surface de tasses.

La Fig. 3 montre un autre exemple possible dans lequel le support de tasses 4A est monobloc et assure à lui seul la fonction du moyen 9A de régulation de chaleur et d'amortissement. Le support peut être constitué par exemple dans un matériau élastomère. Dans ce cas, il n'est pas nécessaire d'interposer un élément supplémentaire entre le support 4A et le corps de chauffe 7.

La Fig. 4 montre un autre exemple possible dans lequel le support de tasses 4B comprend le moyen de régulation de chaleur et d'amortissement 9B. Autrement dit, le support de tasses comprend au moins une couche inférieure 91, voire plusieurs couches, lesquelles assurent les fonctions conjointes de régulateur de chaleur et d'amortissement. Ces couches peuvent être en élastomère ou silicone pour l'amortissement et éventuellement assurer en partie au moins la régulation de chaleur.

Une couche supplémentaire non-amortissante peut être ajoutée pour assurer, compléter ou affiner la régulation de chaleur transmise à la couche de support 40 en contact avec les tasses.

La Fig. 5 montre un autre exemple possible dans lequel le support de tasses comprend aussi les moyens de régulation de chaleur et d'amortissement 9C sous forme d'élément discrets 92. Ces éléments peuvent être des picots, pointes ou des nervures qui prennent appui sur la surface chauffante du corps de chauffe. Certains de ces éléments peuvent être faits en matériaux résilients ou viscoélastiques. Les éléments pourraient aussi être interposés entre le support 4C et le corps de chauffe 7. Il pourrait s'agir d'une ou plusieurs bagues en élastomère par exemple.

La Fig. 6 montre une autre forme possible de dissociation des fonctions des moyens de régulation et d'amortissement. Un amortisseur 93 (par exemple, hydraulique ou une couche de matériau amortissante) est placé entre le support 4D et le corps de chauffe 7. Un autre élément 94 tel qu'une couche en matériau thermiquement régulateur peut être ajoutée en superposition comme montré ou encore en parallèle.

Bien entendu, d'autres modes de réalisation sont possibles sans sortir du cadre de l'invention.

## Revendications

1. Machine pour la préparation de boisson, notamment pour boissons chaudes du type café, comprenant un dispositif de chauffe-tasses lequel comprend au moins un corps de chauffe (7) et au moins une paroi de support (4,40,4D) pour recevoir au moins une tasse; lequel corps de chauffe étant arrangé pour transmettre la chaleur à la paroi de support par conduction; ledit corps de chauffe (7) étant par ailleurs en connexion avec le système de fluide de la machine, en particulier, une pompe (8) pour le transport du fluide dans la machine,
**caractérisée en ce que**
un moyen de régulation de chaleur et d'amortissement (9,9B,9C,90,91,92,93,94) est interposé en contact d'une part avec le corps de chauffe (7) et en contact, d'autre part, avec la paroi de support de tasses (4,40,4D), ledit moyen permettant de réduire les vibrations transmises par la pompe au corps de chauffe.

2. Machine pour la préparation de boisson, notamment pour boissons chaudes du type café, comprenant un dispositif de chauffe-tasses lequel comprend au moins un corps de chauffe (7) et au moins une paroi de support (4A) pour recevoir au moins une tasse; lequel corps de chauffe étant arrangé pour transmettre la chaleur à la paroi de support par conduction; ledit corps de chauffe (7) étant par ailleurs en connexion avec le système de fluide de la machine, en particulier, une pompe (8) pour le transport du fluide dans la machine,
**caractérisée en ce que**
la paroi de support (4A) est constituée en un matériau élastomère et forme un moyen de régulation de chaleur et d'amortissement (9A) disposé au contact du corps de chauffe (7) permettant de réduire les vibrations transmises par la pompe, notamment d'origine hydraulique ou mécanique, au corps de chauffe.

3. Machine selon la revendication 1 ou 2, **caractérisée en ce que** le moyen de régulation de chaleur et le moyen d'amortissement sont un seul et même moyen de régulation de chaleur et d'amortissement (9,9A,9B,90,91).

4. Machine selon l'une quelconque des revendications précédentes, **caractérisée en ce que** le moyen de régulation de chaleur et d'amortissement est en matériau élastique ou viscoélastique (9, 9A,9C,9B,90,91,92).

5. Machine selon l'une quelconque des revendications précédentes, **caractérisée en ce que** le moyen de régulation de chaleur et d'amortissement (9,90) possède une surface de transfert compris entre 0.5 et 3 cm² et une épaisseur compris entre 0.1 et 2 cm.

6. Machine selon la revendication 5, **caractérisée en ce que** le moyen de régulation de chaleur et d'amortissement (9,90,9A,9B,91,9C,92) est en matériau élastomérique ou silicone.

7. Machine selon l'une quelconque des revendications 4 à 6 lorsque dépendante de la revendication 1, **caractérisée en ce que** le moyen de régulation de chaleur et d'amortissement est un bloc ou tampon (9,90) interposé entre le corps de chauffe (7) et le support de tasses (4).

8. Machine selon la revendication 1 ou, en dépendance de la revendication 1, selon l'une quelconque des revendications 3 à 7, **caractérisée en ce que** l'élément support de tasses (4) est en matériau plastique ou en métal.

9. Machine selon la revendication 1, **caractérisée en ce que** le moyen de régulation de chaleur et/ou d'amortissement (9B) est formé par une sous-couche (91) du support de tasses (40) lui-même, telle qu'une sous-couche en matériau élastique ou viscoélastique.

10. Machine selon la revendication 1 ou, en dépendance de la revendication 1, l'une quelconque des revendications 3 à 9, **caractérisée en ce que** le moyen de régulation de chaleur et/ou d'amortissement (9C) forme une multitude de contacts discrets (92) tels que des picots ou nervures en appui sur une surface chauffante du corps de chauffe et, en particulier, formés d'une matière élastique ou viscoélastique.

11. Machine selon la revendication 1, **caractérisée en ce que** le moyen de régulation de chaleur (94) est séparé du moyen d'amortissement (93).

12. Machine selon la revendication 11, **caractérisée en ce que** le moyen d'amortissement (93) est un amortisseur hydraulique.

13. Machine selon la revendication 11 ou 12, **caractérisée en ce que** le moyen de régulation de chaleur (94) est un élément thermiquement isolant tel que de la fibre, du tissu, du feutre, du carton ignifugé ou autres matériaux non ou peu résilient.

14. Méthode pour chauffer un dispositif dit "chauffe-tasse" d'une machine pour la préparation de boisson telle que définie dans l'une quelconque des revendications précédences, **caractérisée en ce qu'**elle consiste, entre autres, à transmettre par conduction une partie seulement de la chaleur de surface du corps de chauffe (7) au support de tasses (4,4A,4B,4C,4D,40) dudit dispositif; lequel corps de chauffe sert à chauffer l'eau dans la machine.

15. Méthode selon la revendication 14, **caractérisée en ce qu'**elle comprend l'interposition entre la surface de support de tasses (4,4A,4B,40,4C,4D) et le corps de chauffe (7) d'au moins un moyen de régulation thermique (9, 9A, 90, 9B, 91, 9C, 92, 94).

16. Méthode selon la revendication 14, **caractérisée en ce que** le moyen de régulation thermique (9, 9A, 90, 9B, 91, 9C, 92, 94) régule la surface de support de tasse (4,4A,4B,4D) à une température comprise entre environ 45 to 65°C lorsque la température de contact du corps de chauffe (7) atteint une valeur comprise entre 100-120°C.

17. Méthode selon la revendication 14, **caractérisée en ce qu'**elle consiste, entre autres, à transmettre par conduction de la chaleur de surface du corps de chauffe (7) au support de tasses (4,4A,4B, 4C,4D,40) tout en amortissant, au moins partiellement, les vibrations transmissibles par le corps de chauffe à la surface de support de tasses.

18. Méthode selon la revendication 17, **caractérisé en ce qu'**elle prévoit d'interposer entre la surface de support de tasse (4,4A,4B,4C,4D,40) et le corps de chauffe (7) au moins un moyen d'amortissement des vibrations (9, 9A, 90, 9B, 91, 9C, 92, 93).

## Claims

1. Machine for the preparation of beverages, in particular hot beverages of the coffee type, comprising a cup-warming device which comprises at least one heating body (7) and at least one holder wall (4, 40, 4D) to receive at least one cup; said heating body being arranged to transmit the heat to the holder wall by conduction; said heating body (7) also being connected to the fluid system of the machine, in particular a pump (8), for the transport of the fluid in the machine,
**characterised in that**
a heat control and damping means (9, 9B, 9C, 90, 91, 92, 93, 94) is interposed in contact with the heating body (7), on the one hand, and in contact with the cup holder wall (4, 40, 4D), on the other hand, said means making it possible to reduce the vibrations transmitted by the pump to the heating body.

2. Machine for the preparation of beverages, in particular hot beverages of the coffee type, comprising a cup-warming device which comprises at least one heating body (7) and at least one holder wall (4A) to receive at least one cup; said heating body being arranged to transmit the heat to the holder wall by conduction; said heating body (7) also being connected to the fluid system of the machine, in particular a pump (8), for the transport of the fluid in the machine,
**characterised in that**
the holder wall (4A) is constituted of an elastomer material and forms a heat control and damping means (9A) arranged in contact with the heating body (7), making it possible to reduce the vibrations transmitted by the pump, in particular of hydraulic or mechanical origin, to the heating body.

3. Machine according to Claim 1 or 2, **characterised in that** the heat control means and the damping means are one and the same heat control and damping means (9, 9A, 9B, 90, 91).

4. Machine according to any one of the preceding claims, **characterised in that** the heat control and damping means is made of elastic or viscoelastic material (9, 9A, 9C, 9B, 90, 91, 92).

5. Machine according to any one of the preceding claims, **characterised in that** the heat control and damping means (9, 90) has a transfer surface area of between 0.5 and 3 cm² and a thickness of between 0.1 and 2 cm.

6. Machine according to Claim 5, **characterised in that** the heat control and damping means (9, 90, 9A, 9B, 91, 9C, 92) is made of elastomeric or silicone material.

7. Machine according to any one of Claims 4 to 6, when dependent on Claim 1, **characterised in that** the heat control and damping means is a block or pad (9, 90) interposed between the heating body (7) and the cup holder (4).

8. Machine according to Claim 1 or, dependent on Claim 1, according to any one of Claims 3 to 7, **characterised in that** the cup holder element (4) is made of plastics material or metal.

9. Machine according to Claim 1, **characterised in that** the heat control and/or damping means (9B) is formed by an underlayer (91) of the cup holder (40) itself, such as an underlayer made of elastic or viscoelastic material.

10. Machine according to Claim 1 or, dependent on Claim 1, any one of Claims 3 to 9, **characterised in that** the heat control and/or damping means (9C) forms a plurality of discrete contacts (92) such as spikes or ribs bearing against a heating surface of the heating body and, in particular, formed from an elastic or viscoelastic material.

11. Machine according to Claim 1, **characterised in that** the heat control means (94) is separate from the damping means (93).

12. Machine according to Claim 11, **characterised in that** the damping means (93) is a hydraulic damper.

13. Machine according to Claim 11 or 12, **characterised in that** the heat control means (94) is a thermally insulating element such as fibre, fabric, felt, fire-resistant cardboard or other materials having little or no resilience.

14. Method for heating a device known as a "cup warmer" of a machine for the preparation of beverages as defined in any one of the preceding claims, **characterised in that** it consists, amongst others, of transmitting by conduction only one portion of the surface heat of the heating body (7) to the cup holder (4, 4A, 4B, 4C, 4D, 40) of said device; said heating body being used for heating water in the machine.

15. Method according to Claim 14, **characterised in that** it comprises the interposition of at least one heat control means (9, 9A, 90, 9B, 91, 9C, 92, 94) between the cup holder surface (4, 4A, 4B, 40, 4C, 4D) and the heating body (7).

16. Method according to Claim 14, **characterised in that** the heat control means (9, 9A, 90, 9B, 91, 9C, 92, 94) maintains the cup holder surface (4, 4A, 4B, 4D) at a temperature of between approximately 45 to 65°C when the contact temperature of the heating body (7) reaches a value of between 100-120°C.

17. Method according to Claim 14, **characterised in that** it consists, amongst others, in transmitting by conduction surface heat of the heating body (7) to the cup holder (4, 4A, 4B, 4C, 4D, 40) whilst damping, at least partially, the vibrations which are able to be transmitted by the heating body to the cup holder surface.

18. Method according to Claim 17, **characterised in that** it provides for the interposition of at least one means for damping vibrations (9, 9A, 90, 9B, 91, 9C, 92, 93) between the cupholder surface (4,4A,4B,4C,4D,40) and the heating body (7).

## Patentansprüche

1. Getränkezubereitungsmaschine, insbesondere für warme Getränke wie Kaffee, die eine Tassenwärmvorrichtung umfasst, welche mindestens einen Heizkörper (7) und mindestens eine Tragplatte (4, 40, 4D) zur Aufnahme von mindestens einer Tasse aufweist, wobei dieser Heizkörper so angeordnet ist, dass er die Wärme per Wärmeleitung an die Tragplatte abgibt, wobei der Heizkörper (7) ferner in Verbindung mit dem Fluidsystem der Maschine steht, insbesondere einer Pumpe (8) zur Beförderung des Fluids in der Maschine,
**dadurch gekennzeichnet,**
**dass** ein Mittel zur Wärmeregulierung und Schwingungsdämpfung (9, 9B, 9C, 90, 91, 92, 93, 94) in Kontakt mit dem Heizkörper (7) einerseits und mit der Tassentragplatte (4, 40, 4D) andererseits dazwischen angeordnet ist, wobei durch dieses Mittel die von der Pumpe auf den Heizkörper übertragenen Schwingungen gedämpft werden können.

2. Getränkezubereitungsmaschine, insbesondere für warme Getränke wie Kaffee, die eine Tassenwärmvorrichtung umfasst, welche mindestens einen Heizkörper (7) und mindestens eine Tragplatte (4A) zur Aufnahme von mindestens einer Tasse aufweist, wobei dieser Heizkörper so angeordnet ist, dass er die Wärme per Wärmeleitung an die Tragplatte abgibt, wobei der Heizkörper (7) ferner in Verbindung mit dem Fluidsystem der Maschine steht, insbesondere einer Pumpe (8) zur Beförderung des Fluids in der Maschine,
**dadurch gekennzeichnet,**
**dass** die Tragplatte (4A) aus einem Elastomerwerkstoff gebildet ist und ein Mittel zur Wärmeregulierung und Schwingungsdämpfung (9) bildet, das in Kontakt mit dem Heizkörper (7) angeordnet ist und es ermöglicht, die von der Pumpe auf den Heizkörper übertragenen Schwingungen insbesondere hydraulischen oder mechanischen Ursprungs zu dämpfen.

3. Maschine nach Anspruch 1 oder 2,
**dadurch gekennzeichnet,**
**dass** das Mittel zur Wärmeregulierung und das Mittel zur Schwingungsdämpfung als ein einziges Mittel zur Wärmeregulierung und Schwingungsdämpfung (9, 9A, 9B, 90, 91) ausgeführt sind.

4. Maschine nach einem der vorherigen Ansprüche,
**dadurch gekennzeichnet,**
**dass** das Mittel zur Wärmeregulierung und Schwingungsdämpfung aus elastischem oder viskoelastischem Werkstoff (9, 9A, 9C, 9B, 90, 91, 92) besteht.

5. Maschine nach einem der vorherigen Ansprüche,
**dadurch gekennzeichnet,**
**dass** das Mittel zur Wärmeregulierung und Schwingungsdämpfung (9, 90) eine Übertragungsfläche von 0,5 bis 3 cm² und eine Stärke von 0,1 bis 2 cm aufweist.

6. Maschine nach Anspruch 5,
**dadurch gekennzeichnet,**
**dass** das Mittel zur Wärmeregulierung und Schwingungsdämpfung (9, 90, 9A, 9B, 91, 9C, 92) aus einem Elastomerwerkstoff oder Silikonwerkstoff besteht.

7. Maschine nach einem der Ansprüche 4 bis 6, soweit sie Unteransprüche von Anspruch 1 sind,
**dadurch gekennzeichnet,**
**dass** das Mittel zur Wärmeregulierung und Schwingungsdämpfung ein Block oder Puffer (9, 90) ist, der zwischen dem Heizkörper (7) und der Tassentragplatte (4) angeordnet ist.

8. Maschine nach Anspruch 1 oder, als Unteransprüche von Anspruch 1, nach einem der Ansprüche 3 bis 7,
**dadurch gekennzeichnet,**
**dass** das Tassentragelement (4) aus Kunststoff oder aus Metall besteht.

9. Maschine nach Anspruch 1,
**dadurch gekennzeichnet,**
**dass** das Mittel zur Wärmeregulierung und/oder Schwingungsdämpfung (9B) durch eine Unterschicht (91) der Tassentragplatte (40) selbst gebildet wird, wie beispielsweise eine Unterschicht aus elastischem oder viskoelastischem Werkstoff.

10. Maschine nach Anspruch 1 oder, als Unteransprüche von Anspruch 1, nach einem der Ansprüche 3 bis 9,
**dadurch gekennzeichnet,**
**dass** das Mittel zur Wärmeregulierung und/oder Schwingungsdämpfung (9C) eine Vielzahl von diskreten Kontakten (92) wie beispielsweise Spitzen oder Rippen in Anlage an einer Heizoberfläche des Heizkörpers bildet, die insbesondere aus einem elastischen oder viskoelastischen Werkstoff gebildet sind.

11. Maschine nach Anspruch 1,
**dadurch gekennzeichnet,**
**dass** das Mittel zur Wärmeregulierung (94) von dem Mittel zur Schwingungsdämpfung (93) getrennt besteht.

12. Maschine nach Anspruch 11,
**dadurch gekennzeichnet,**
**dass** das Mittel zur Schwingungsdämpfung (93) ein hydraulischer Schwingungsdämpfer ist.

13. Maschine nach Anspruch 11 oder 12,
**dadurch gekennzeichnet,**
**dass** das Mittel zur Wärmeregulierung (94) ein wärmedämmendes Element ist, wie zum Beispiel flammwidrig gemachte Fasern, Gewebe, Filz, Pappe oder sonstige nicht schlagzähe oder kaum schlagzähe Werkstoffe.

14. Verfahren zum Erwärmen einer so genannten "Tassenwärmvorrichtung" einer Getränkezubereitungsmaschine, wie in einem der vorherigen Ansprüche definiert,
**dadurch gekennzeichnet,**
**dass** sie unter anderem darin besteht, durch Wärmeleitung nur einen Teil der Oberflächenwärme des Heizkörpers (7) an die Tassentragplatte (4, 4A, 4B, 4C, 4D, 40) dieser Vorrichtung zu übertragen, wobei dieser Heizkörper dazu dient, das Wasser in der Maschine aufzuheizen.

15. Verfahren nach Anspruch 14,
**dadurch gekennzeichnet,**
**dass** es beinhaltet, zwischen der Tassentragplattenfläche (4, 4A, 4B, 40, 4C, 4D) und dem Heizkörper (7) mindestens ein Mittel zur Wärmeregulierung (9, 9A, 90, 9B, 91, 9C, 92, 94) anzuordnen.

16. Verfahren nach Anspruch 14,
**dadurch gekennzeichnet,**
**dass** das Mittel zur Wärmeregulierung (9, 9A, 90, 9B, 91, 9C, 92, 94) die Oberfläche der Tassentragplatte (4, 4A, 4B, 4D) auf eine Temperatur regelt, die zwischen ca. 45°C und 65°C liegt, wenn die Kontakttemperatur des Heizkörpers (7) einen Wert von 100°C bis 120°C erreicht.

17. Verfahren nach Anspruch 14,
**dadurch gekennzeichnet,**
**dass** es unter anderem darin besteht, Wärme per Wärmeleitung von der Oberfläche des Heizkörpers (7) an die Tassentragplatte (4, 4A, 4B, 4C, 4D, 40) zu übertragen und dabei zugleich zumindest teilweise die durch den Heizkörper auf die Oberfläche der Tassentragplatte übertragbaren Schwingungen zu dämpfen.

18. Verfahren nach Anspruch 17,
**dadurch gekennzeichnet,**
**dass** dabei vorgesehen ist, zwischen der Tassentragplattenfläche (4, 4A, 4B, 4C, 4D, 40) und dem Heizkörper (7) mindestens ein Mittel zur Schwingungsdämpfung (9, 9A, 90, 9B, 91, 9C, 92, 93) anzuordnen.
